# EUROPEAN PATENT APPLICATION

(11) **EP 4 364 967 A1**
(43) Date of publication of application: **08.05.2024**
(21) Application number: 21948480.5
(22) Date of filing: 02.11.2021
(51) Int. Cl.: B60C 9/18, B60C 19/00

(54) **TIRE**

(30) Priority: 30.06.2021 JP 2021109733
(71) Applicant: BRIDGESTONE CORPORATION, Chuo-ku Tokyo 104-8340 (JP)
(72) Inventor: HASHIMOTO, Masayuki, Tokyo 104-8340 (JP)
(74) Representative: Marks & Clerk LLP
(86) International application number: PCT/JP2021/040452
(87) International publication number: WO 2023/276177

(57) **Abstract**

Provided is a tire comprising a pair of bead cores 5, a carcass 6, and a plurality of belt layers, wherein the plurality of belt layers comprise a first belt layer 7 with cords extending along the tire circumferential direction CD, and a second belt layer 8 with cords extending at an angle to the tire circumferential direction CD, which is arranged on the outer side in the tire radial direction than the circumferential belt layer, a communication device having a linear antenna is embedded at a tire radial position, that is inner side in the tire radial direction than a tire maximum width position and outer side in the tire radial direction than an outer edge position of the bead core 5 in the tire radial direction, and the linear antenna of the communication device is arranged along the tire circumferential direction.

## Description

### TECHNICAL FIELD

The present disclosure relates to a tire.

This application claims priority based on Patent Application No. 2021-109733 filed in Japan on June 30, 2021, and its entire content is hereby incorporated by reference.

### BACKGROUND

It has been conventionally known to embed a communication device, such as a sensor that detects the internal condition of the tire, e.g., tire air pressure, or an RF tag with a memory section that can store unique identification information of the tire, etc., inside a tire. For example, a sensor as a communication device can be used to determine the condition of the tire during driving, and various tire information obtained from the memory section of the RF tag as a communication device can be used for maintenance services and other purposes.

Patent document 1 discloses a tire in which the RF tag is covered with covering rubber and disposed in a bead portion reinforced by a fiber reinforcement layer, thereby reducing the risk of damage to the RF tag.

### CITATION LIST

### Patent Literature

PTL 1: JP 2021/46057 A1

### SUMMARY

### (Technical Problem)

However, in the conventional technology, there was room for improvement in the durability of the communication device when the tire is loaded.

The purpose of this disclosure is to solve the aforementioned problems and to provide a tire that can ensure sufficient durability of communication devices.

### (Solution to Problem)

The tire of this disclosure is:
a tire comprising a pair of bead cores embedded in a pair of bead portions, a carcass toroidally straddling the pair of bead cores, and a plurality of belt layers disposed on the outer side of the crown portion of the carcass in the tire radial direction, wherein
the plurality of belt layers comprise at least one first belt layer with cords extending along the tire circumferential direction, and at least one second belt layer with cords extending at an angle to the tire circumferential direction, which is arranged on the outer side in the tire radial direction than the circumferential belt layer,
a communication device, having an IC chip and at least one linear antenna connected to the IC chip, is embedded at a tire radial position, that is inner side in the tire radial direction than a tire maximum width position and outer side in the tire radial direction than an outer edge position of the bead core in the tire radial direction, and
the linear antenna of the communication device is arranged along the tire circumferential direction.

### (Advantageous Effect)

The present disclosure can provide a tire that can ensure sufficient durability of communication devices.

### BRIEF DESCRIPTION OF THE DRAWINGS

In the accompanying drawings:
FIG. 1 is a cross-sectional view (half view) in the tire width direction of the tire according to the first embodiment of this disclosure;
FIG. 2 schematically illustrates a belt structure of the tire according to the first embodiment of this disclosure;
FIG. 3 is a diagram of an RF tag as a communication device to be disposed on the tire according to the first embodiment of this disclosure;
FIG. 4 schematically illustrates a cross-sectional view in the tire circumferential direction of the tire according to the first embodiment of this disclosure;
FIG. 5A is a diagram for explaining a neutral axis of deformation of the belt layer of a conventional tire during load rolling;
FIG. 5B is a diagram for explaining a neutral axis of deformation of the belt layer of the tire, during load rolling, according to the first embodiment of this disclosure;
FIG. 6A is a diagram for explaining the deformation of a conventional tire under load rolling;
FIG. 6B is a diagram for explaining the deformation of the tire, during load rolling, according to the first embodiment of this disclosure;
FIG. 7 schematically illustrates another example of a belt structure; and
FIG. 8 schematically illustrates yet another example of a belt structure.

### DETAILED DESCRIPTION

The tire according to the present disclosure can be used for any type of tire, but can suitably be used for a truck or bus tire.

The following is an illustrative explanation of the embodiment(s) of the tire in accordance with the present disclosure, with reference to the drawings. In each figure, common components are marked with the same reference numerals.

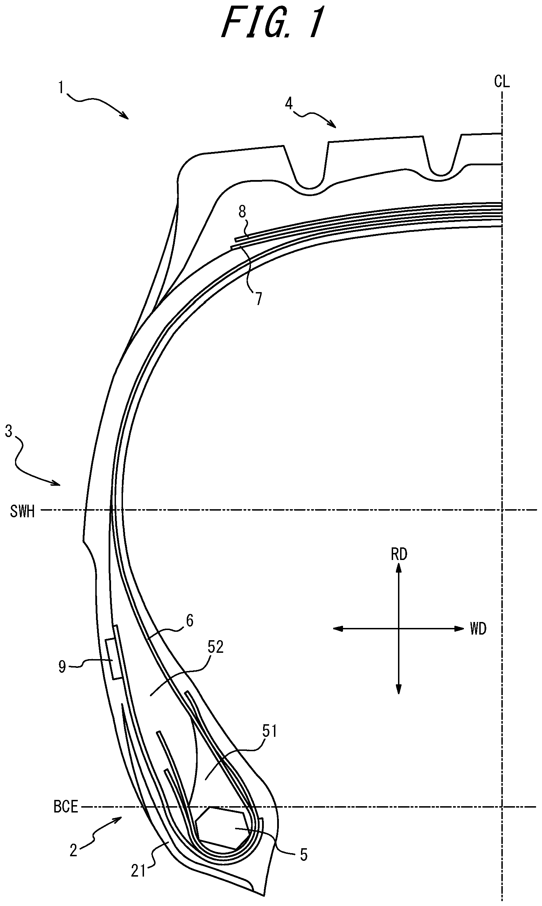

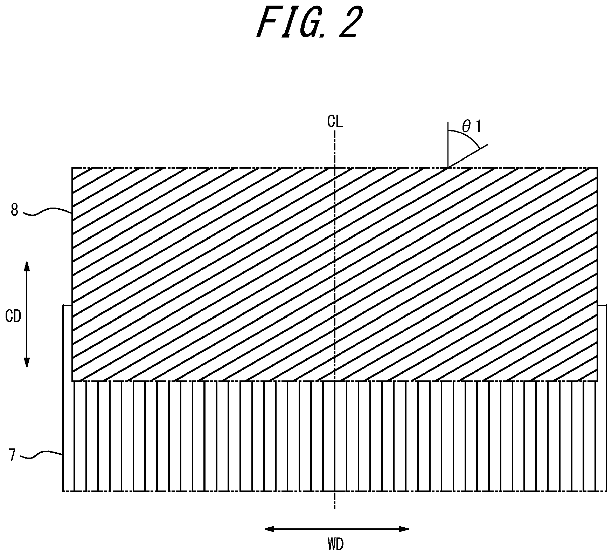

Figure 1 is a cross-sectional view (half view) in the tire width direction of a tire 1 according to the first embodiment of this disclosure. Figure 2 schematically illustrates a belt structure of the tire 1 according to the first embodiment of this disclosure.

In this document, unless otherwise noted, the positional relationship and dimensions of each element shall be measured under the reference condition, with the tire 1 mounted on the applicable rim, filled with the prescribed internal pressure, and unloaded.

As used herein, the term "applicable rim" refers to the standard rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States. The "applicable rim" includes current sizes as well as future sizes to be listed in the aforementioned industrial standards. An example of the "size as described in the future" could be the sizes listed as "FUTURE DEVELOPMENTS" in the ETRTO's STANDARDS MANUAL 2013 edition. For sizes not listed in these industrial standards, the term "applicable rim" refers to a rim with a width corresponding to the bead width of the tire.

In addition, the "prescribed internal pressure" refers to the air pressure (maximum air pressure) corresponding to the maximum load capacity of a single wheel in the applicable size and ply rating, as described in the aforementioned JATMA YEAR BOOK and other industrial standards. In the case that the size is not listed in the aforementioned industrial standards, the "prescribed internal pressure" refers to the air pressure (maximum air pressure) corresponding to the maximum load capacity specified for each vehicle in which the tire is mounted.

Note, that the air as used herein can be replaced by inert gas such as nitrogen gas or other inert gas.

In this document, the term "tire maximum width position" means the position in the tire radial direction where the distance in the tire width direction between the carcasses at a pair of sidewall portions is the greatest.

Also, in this document, the term "tire circumferential direction" is also referred to as the term "tire circumferential direction CD" and the term "tire width direction" is also referred to as the term "tire width direction WD". In this document, the term "tire radial direction" is also referred to as the term "tire radial direction RD". In each figure, the tire circumferential direction (CD) is indicated by the CD arrow, the tire width direction (WD) is indicated by the WD arrow, and the tire radial direction (RD) is indicated by the RD arrow, respectively.

As illustrated in Figure 1, the tire 1 according to the first embodiment of this disclosure comprises a pair of bead portions 2, a pair of sidewall portions 3, and a tread portion 4 spanning between the two sidewall portions.

The tire 1 comprises a pair of bead cores 5, embedded in the pair of bead portions 2, and a carcass 6 toroidally straddling the pair of bead cores 5.

The carcass 6 toroidally straddles between the pair of bead cores 5 and forms the frame of the tire.

Preferably, the carcass 6 has a carcass body portion disposed between the bead cores 5 and carcass turn-up portions that are folded around the bead cores 5 from the inside to the outside in the tire width direction. However, the carcass 6 does not have to have carcass turn-up portions.

The carcass 6 includes one or more carcass plies (one in this embodiment). Each carcass ply has carcass cords and coating rubber that covers the carcass cords, respectively.

The carcass cords may be made of metal, such as steel, or organic fibers, such as polyester, nylon, rayon, or aramid.

The configuration of the bead portion 2 in the tire 1 according to this embodiment is not limited. As illustrated in Figure 1, the tire 1 may comprise a bead filler 51 on the outer side of the pair of bead cores 5 in the tire radial direction, and a stiffener 52 on the outer side of the bead filler 51 in the tire radial direction. Also, the tire 1 according to this embodiment may also comprise a rubber chafer 21, which is disposed in the bead portion 2 so that it is at least partially in contact with the applicable rim when mounted on the applicable rim.

As illustrated in Figures 1 and 2, the tire 1 according to this embodiment comprises a plurality of belt layers (two layers in this embodiment) disposed on the outer side of the crown portion of the carcass 6 in the tire radial direction RD.

The plurality of belt layers comprise at least one first belt layer 7 (one layer in this embodiment) with cords extending along the tire circumferential direction CD, and at least one second belt layer 8 (one layer in this embodiment) with cords extending at an angle to the tire circumferential direction CD, which is arranged on the outer side in the tire radial direction RD than the circumferential belt layer.

Here, the term "cords extending along the tire circumferential direction (CD)" shall include cases where the cords are parallel to the tire circumferential direction CD or where the cords are slightly inclined to the circumferential direction of the tire (inclined to the tire circumferential direction CD at an angle of 5° or less) due to the result of forming the belt layer by spirally winding a strip of cords coated with rubber, etc.

In addition, the term "cords extending at an angle to the tire circumferential direction (CD)" shall means cords that are inclined at a greater angle to the tire circumferential direction CD than the cords extending along the tire circumferential direction CD described above, and the angle is not particularly limited.

In Figures 1 and 2, the first belt layer 7 is slightly larger than the second belt layer 8 in the tire width direction, but the lengths of the first belt layer 7 and the second belt layer 8 in the tire width direction are not limited.

The first belt layer 7 and the second belt layers 8 have cords and coating rubber covering the cords. The cord material is not limited and may be made of organic fibers such as polyester, nylon, rayon, or aramid, or of metals such as steel. Also, the coating rubber can be any known rubber material, such as rubber materials normally used for the belt coating rubber.

In the tire 1 according to this embodiment, a communication device 9, having an IC chip 10 and at least one linear antenna 9a connected to the IC chip 10, is embedded at a tire radial position, that is inner side in the tire radial direction than the tire maximum width position SWH and outer side in the tire radial direction than the outer edge position of the bead core 5 in the tire radial direction.

The configuration of the communication device 9 is not limited to any particular configuration, as long as the communication device 9 is capable of wireless communication with a predetermined device outside the tire 1. The communication device 9 can be, for example, an RF tag. The RF tag is also referred to as an RFID (Radio Frequency Identification) tag. The communication device 9 has an IC chip 10, which constitutes the control section and a storage section, and one or more linear antennas 9a, which are connected to the IC chip 10. For example, the communication device 9 may have an overall longitudinal shape with two linear antennas extending in opposite directions from the IC chip 10. Here, the term "linear" is not limited to straight lines, but includes shapes extending wavy or spirally.

The IC chip 10 may also be operated by induced electromotive force generated by electromagnetic waves received by the one or more antennas. In other words, the communication device 9 may be a passive communication device. Alternatively, the communication device 9 may be further provided with a battery, so that to be able to communicate by generating electromagnetic waves using its own power. In other words, the communication device 9 may be an active communication device.

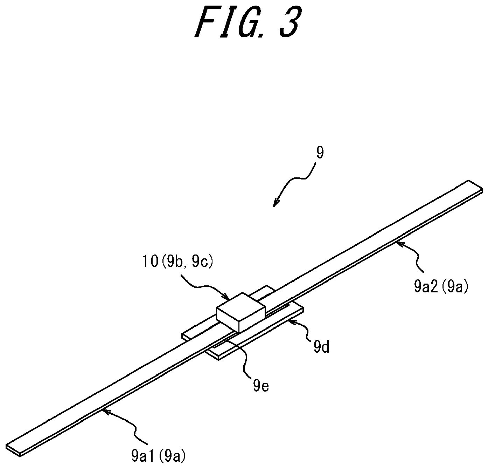

Figure 3 is a perspective view illustrating an RF tag as a communication device 9 to be disposed on the tire 1 in this embodiment. As illustrated in Figure 3, the RF tag as a communication device 9 to be disposed on the tire 1 in this embodiment comprises: a first antenna 9a1 and a second antenna 9a2 which constitute the antenna 9a; an IC chip 10 which constitutes the control section 9b and the storage section 9c, which is operated by induced electromotive force generated by radio waves received by these first antenna 9a1 and second antenna 9a2; the plate-like support member 9d to which the IC chip 10 is attached; and a conductive member 9e electrically connecting the IC chip 10 and each of the first antenna 9a1 and the second antenna 9a2.

The communication device 9 may be covered by coated rubber.

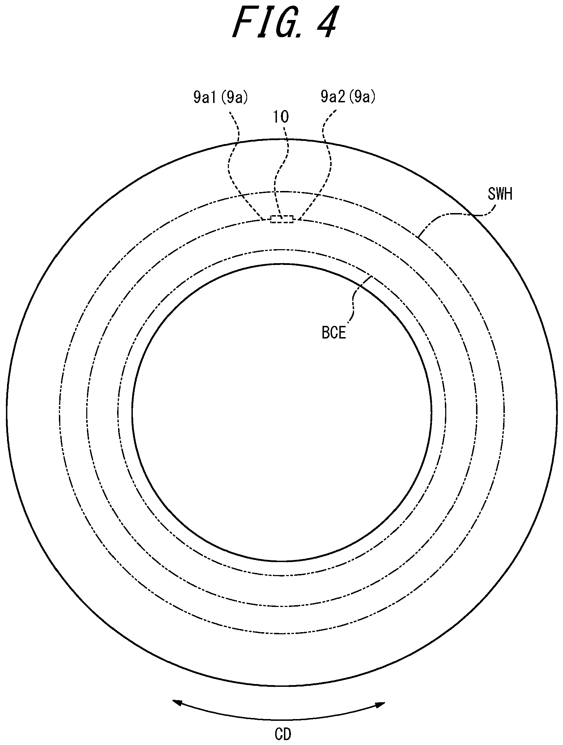

Figure 4 schematically illustrates a cross-sectional view in the tire circumferential direction of the tire 1 according to the first embodiment of this disclosure.

As illustrated in Figures 1 and 4, in the tire 1 according to this embodiment, a communication device 9 is embedded at a tire radial position, that is inner side in the tire radial direction than the tire maximum width position SWH and outer side in the tire radial direction than the outer edge position BCE of the bead core 5 in the tire radial direction. In addition, in the tire 1 according to this embodiment, the linear antenna 9a of the communication device 9 (in this embodiment, the first antenna 9a1 and the second antenna 9a2) is arranged along the tire circumferential direction CD.

Here, the term "arranged along the tire circumferential direction (CD)" shall include cases where the longitudinal direction of the antenna extending in a straight, wavy, or spiral shape is parallel to the tire circumferential direction CD or slightly inclined with respect to the tire circumferential direction CD (inclination angle to the tire circumferential direction CD is 5° or less).

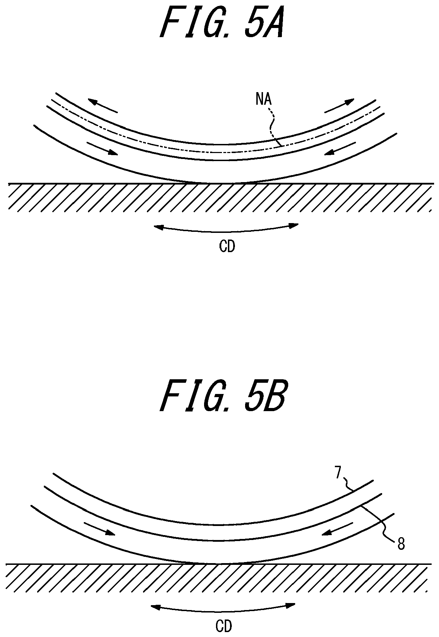

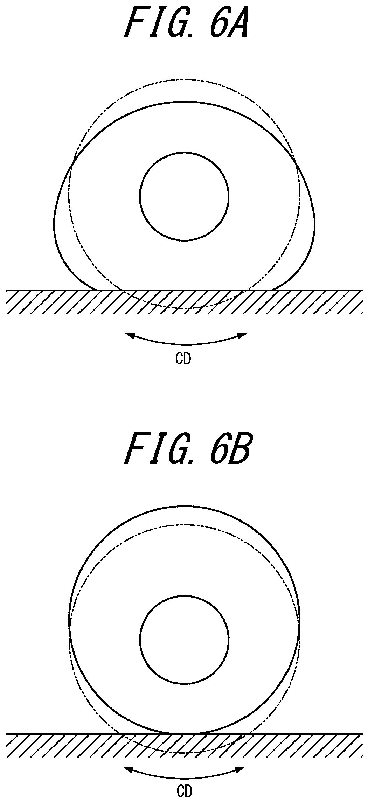

The effects of the configuration of the tire 1 according to this embodiment are explained below with reference to Figures 5A, 5B, 6A, and 6B.

Figure 5A is a diagram for explaining a neutral axis of deformation of the belt layer of a conventional tire during load rolling. Figure 5B is a diagram for explaining a neutral axis of deformation of the belt layer of the tire 1, during load rolling, according to the first embodiment of this disclosure. Figure 6A is a diagram for explaining the deformation of a conventional tire under load rolling. Figure 6B is a diagram for explaining the deformation of the tire 1, during load rolling, according to the first embodiment of this disclosure. In Figures 6A and 6B, the dotted lines in the figures represent the outline of the tire before deformation, and the solid lines represent the outline of the tire during load rolling.

Figure 5A illustrates a conventional tire comprising two belt layers that do not have the configuration of belt layer according to the present disclosure. Here, the term "do not have the configuration of belt layer according to the present disclosure" means, for example, having only two inclined belt layers with cords extending at an angle to the tire circumferential direction CD, etc.

In the tire comprising two belt layers that do not have the configuration of belt layer according to the present disclosure, the neutral axis of deformation NA is located between the belt layer on the outer side in the tire radial direction and the belt layer on the inner side in the tire radial direction, and a compression force is generated in the belt layer on the outer side in the tire radial direction and a tensile force is generated in the belt layer on the outer side in the tire radial direction. As a result, the tread rubber is stretched and contracted, causing deformation such that the contour of the tire is collapsed, as illustrated by the solid line in Figure 6a, and resulting in greater distortion when the tire is stepping onto the road surface and when the tire is kicking off from the road surface. If the communication device is embedded in the tire, the durability of the communication device may be compromised by the above distortion. On the other hand, in the tire 1 according to the first embodiment of this disclosure, illustrated in Figure 5B, the first belt layer 7 with cords extending along the tire circumferential direction CD exhibits high stiffness and serves as the neutral axis. Then, only the force of compression on the second belt layer 8 having cords extending at an angle to the tire circumferential direction CD, which is disposed on the outer side in the tire radial direction, affects the deformation, so that the tire is lifted up while maintaining its annular shape, as illustrated by the solid line in Figure 6B. In this case, the tire distortion in tire circumferential direction is controlled when the tire is stepping onto the road surface and when the tire is kicking off from the road surface. In such a tire 1 with reduced deformation in the tire circumferential direction, burying the linear antenna 9a along the circumferential direction of the tire 1 mitigates the effect on the elongated antenna 9a, and sufficient durability of the communication device 9 can be ensured.

The following is a description of each component of the tire 1 according to the first embodiment of this disclosure, including suitable configurations and variations.

In the tire 1 according to this embodiment, the number of second belt layer 8 is not limited to as long as it is one or more, but it is preferably two or more.

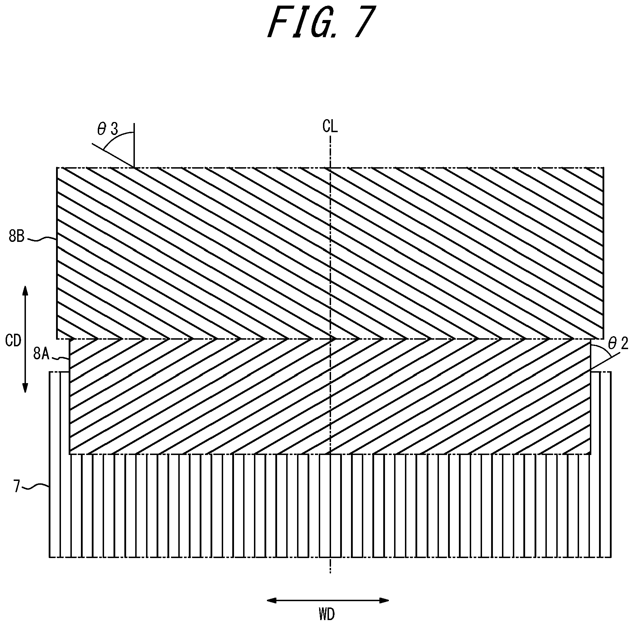

In another example of a belt structure illustrated in Figure 7, a second belt layer 8A and a second belt layer 8B are disposed on the outer side of the first belt layer 7 in the tire radial direction.

According to the above configuration, the force of compression generated in the second belt layer 8, with cords extending at an angle to the tire circumferential direction CD, is greater than in the case that the second belt layer is comprised of one layer. In addition, since the first belt layer 7, which serves as the neutral axis, is located more inward in the tire radial direction due to the increased number of the second belt layer 8, it exhibits rigidity on the inner side in the tire radial direction and the distortion in the tire circumferential direction is further controlled, thus sufficient durability of the communication device 9 can be ensured more effectively.

In the tire 1 according to this embodiment, the inclination angle θ1 of the cords of the second belt layer 8 with respect to the tire circumferential direction CD is not particularly limited, but at least one layer of the second belt layers 8 preferably has cords extending at an inclined angle of 45° to 70° to the tire circumferential direction CD.

When the tire 1 is running straightly, the smaller the inclination angle of the cords of the belt layer with respect to the tire circumferential direction, the easier it tends to bear the tension in the tire circumferential direction applied to the tread portion. However, according to the above inclination angle, the second belt layer 8 bears relatively less of the tension in the tire circumferential direction. In this way, the tension load on the inner side in the tire radial direction is higher than in the second belt layer 8, and the first belt layer 7, which is the neutral axis on the inner side in the tire radial direction, makes it easier to control the tire deformation. This further controls the distortion in the tire circumferential direction, thus sufficient durability of the communication device 9 can be more effectively ensured.

More preferably, the inclination angle θ1 is 50° to 65° from the viewpoint of ensuring sufficient durability of the communication device 9.

When there are two or more second belt layers 8 in the tire 1 according to this embodiment, the inclination angle of the cords of each second belt layer 8 may be the same or different from each other.

In another example of the belt structure illustrated in Figure 7, the inclination angles θ2 and θ3 of the second belt layer 8A and the second belt layer 8B are the same with respect to the tire circumferential direction CD, but are inclined in different directions relative to the tire equatorial plane CL, and extend in directions that intersect with each other.

Also, in the case where the inclination angles θ2 and θ3 are different from each other, one of the inclination angles θ2 and θ3 is preferably between 45° and 70°.

In the tire 1 according to this embodiment, the position of the communication device 9 is not limited to any particular position in the tire radial direction, as long as it is embedded in a tire radial position, that is inner side in the tire radial direction than the tire maximum width position SWH and outer side in the tire radial direction than the outer edge position BCE of the bead core 5 in the tire radial direction. However, the communication device 9 is preferably embedded in a tire radial position, that is inner side in the tire radial direction than the outer edge of the stiffener 52 in the tire radial direction and outer side in the tire radial direction than the outer edge of the rubber chafers 21 in the tire radial direction.

The above configuration more effectively ensures sufficient durability of the communication device 9 as well as sufficient communication of the communication device 9.

In addition, in the tire 1 according to this embodiment, belt layers may not be provided on the inner side of the first belt layer 7 in the tire radial direction.

According to the above configuration, since the first belt layer 7, which serves as the neutral axis, functions reliably as the neutral axis on the inner side in the tire radial direction, this makes it easier to control tire deformation. In this way, sufficient durability of the communication device 9 can be more effectively ensured.

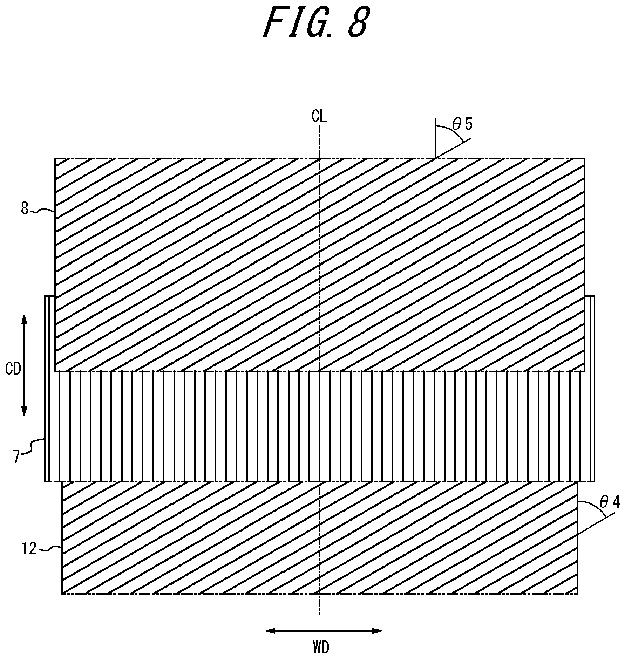

Figure 8 schematically illustrates yet another example of the belt structure of the tire 1 according to the first embodiment.

In the tire 1 of this embodiment, as illustrated in Figure 8, a third belt layer 12 with cords extending at an inclined angle θ4 of 45° to 70° to the tire circumferential direction CD may be provided on the inner side of the first belt layer in the tire radial direction.

When the tire 1 comprises the third belt layer 12, the number of the first belt layer 7 and the second belt layer 8 is not limited as long as there is more than one layer, and the inclined angle θ5 of the cords of the second belt layer 8 is not limited.

In addition, in Figure 8, the third belt layer 12 is slightly smaller in length in the tire width direction than the first belt layer 7 and has the same length in the tire width direction as the second belt layer 8. However, the length of the first belt layer 7, the second belt layer 8, and the third belt layer 12 in the tire width direction is not particularly limited.

According to the above configuration, when the tire 11 rides up on a projection, curb, etc., dents occur in the tread rubber in areas where the tire comes in contact with protrusions, curbs, etc., and a tensile force to the tire width direction WD is generated on the outer side portion of the tread rubber in the tire radial direction. The third belt layer 12, which is disposed on the inner side of the first belt layer in the tire radial direction, can bear the tension in the tire width direction WD, thus the distortion of the entire tire is controlled, and the durability of the communication device 9 embedded in the tire 1 can be maintained.

### INDUSTRIAL APPLICABILITY

The tires of this disclosure can be used for any type of tire, but can suitably be used for a truck or bus tire.

### REFERENCE SIGNS LIST

- 1: Tire
- 2: Bead portion
- 3: Sidewall portion
- 4: Tread portion
- 5: Bead core
- 6: Carcass
- 7: First belt layer
- 8: Second belt layer
- 9: Communication device
- 9a: Antenna
- 9a1: First antenna
- 9a2: Second antenna
- 9b: Control section
- 9c: Storage section
- 9d: Support member
- 9e: Conductive member
- 10: IC chip
- 12: Third belt layer
- 21: Rubber chafer
- 51: Bead filler
- 52: Stiffener
- BCE: Outer edge position of bead core in the tire radial direction
- WD: Tire width direction
- CD: Tire circumferential direction
- RD: Tire radial direction
- SWH: Tire maximum width position

## Claims

1. A tire comprising a pair of bead cores embedded in a pair of bead portions, a carcass toroidally straddling the pair of bead cores, and a plurality of belt layers disposed on the outer side of the crown portion of the carcass in the tire radial direction, wherein
the plurality of belt layers comprise at least one first belt layer with cords extending along the tire circumferential direction, and at least one second belt layer with cords extending at an angle to the tire circumferential direction, which is arranged on the outer side in the tire radial direction than the circumferential belt layer,
a communication device, having an IC chip and at least one linear antenna connected to the IC chip, is embedded at a tire radial position, that is inner side in the tire radial direction than a tire maximum width position and outer side in the tire radial direction than an outer edge position of the bead core in the tire radial direction, and
the linear antenna of the communication device is arranged along the tire circumferential direction.

2. The tire according to claim 1, wherein the second belt layer has two or more layers.

3. The tire according to claim 1 or 2, wherein at least one layer of the second belt layers has cords extending at an inclined angle of 45° to 70° to the tire circumferential direction.

4. The tire according to any one of claims 1 to 3, comprising no belt layer on the inner side of the first belt layer in the tire radial direction.

5. The tire according to any one of claims 1 to 3, comprising a third belt layer with cords extending at an inclined angle of 45° to 70° to the tire circumferential direction on the inner side of the first belt layer in the tire radial direction.

6. The tire according to any one of claims 1 to 5, wherein the communication device is an RF tag.
